# EUROPEAN PATENT SPECIFICATION

(11) **EP 2 610 734 B1**
(45) Date of publication and mention of the grant of the patent: **24.10.2018**
(21) Application number: 12198263.1
(22) Date of filing: 19.12.2012
(51) Int. Cl.: G06F 3/12, G06K 15/02

(54) **Image forming apparatus, image forming method, and computer readable storage medium storing program**
Bilderzeugungsvorrichtung, Bilderzeugungsverfahren und Speicherprogramm für computerlesbares Speichermedium
Appareil de formation d'image, procédé de formation d'image et support de stockage lisible par ordinateur stockant un programme

(30) Priority: 26.12.2011 JP 2011282930
(43) Date of publication of application: 03.07.2013
(73) Proprietor: Konica Minolta Business Technologies, Inc., Tokyo 100-7014 (JP)
(72) Inventor: Ozawa, Masahiro, Tokyo, 100-7014 (JP); Nounishi, Toyoshige, Tokyo, 100-7014 (JP); Matsunaga, Takahisa, Tokyo, 100-7014 (JP); Nogawa, Hiroshi, Tokyo, 100-7014 (JP); Aoyama, Yasufumi, Tokyo, 100-7014 (JP); Satou, Kunikazu, Tokyo, 100-7014 (JP); Ri, Tetsuren, Tokyo, 100-7014 (JP)
(74) Representative: Henkel, Breuer & Partner

(56) References cited:
- US-A1- 2011 273 743

## Description

### BACKGROUND OF THE INVENTION

### 1. Field of the Invention

The present invention relates to an image forming apparatus, an image forming method, and a computer readable storage medium which stores a program therein.

### 2. Description of the Related Art

In general, in a case where an image forming apparatus performs printing on the basis of data stored in an external device such as a personal computer, a printer driver installed in the external device converts data which is a subject for printing into a printer language (Page Description Language (PDL), or the like), and the printer language is sent to the image forming apparatus. In this case, the image forming apparatus forms images (image formation) by generating bitmap data on the basis of the inputted printer language without identifying a format or contents of the data before being converted into the printer language.

Incidentally, there is a direct print method for forming images on the basis of data sent from an external device, the data not being converted into a printer language or the like by a printer driver. In this method, an image forming apparatus generates bitmap data on the basis of the data sent thereto without being converted into a printer language or the like.

In direct print, data sent without being converted into a printer language or the like is not data generated for image formation, and hence includes data unrelated to image formation. For example, an OOXML (Office Open XML) file includes data related to editing of contents of the file or the like in addition to data related to display and data related to image formation.

According to Japanese Patent Application Laid-Open Publication No. 2006-235756, there is an image processing apparatus which distinguishes data unrelated to image formation from data related to image formation so as to store these data separately from each other when receiving a print job including the data unrelated to image formation in direct print.

However, as is the case with the image processing apparatus disclosed in Japanese Patent Application Laid-Open Publication No. 2006-235756, in order to store both data related to image formation and data unrelated to image formation, an image processing apparatus needs a large storage capacity. In addition, it takes much time for the image processing apparatus to store a large number of and/or large amounts of data, and hence a large amount of a processing capacity of the image processing apparatus is used therefor. Consequently, efficiency of image formation declines owing to storage of data unrelated to image formation.

US 2011-273473 A1 discloses an image forming apparatus which includes a data reception unit, a data analysis unit, and a print image generation unit. The data reception unit is configured to receive print data. The data analysis unit is configured to analyze the print data for each of a plurality of blocks, delete a block of a page that is not specified as a print target on the basis of print setting information included in the print data, and rearrange the blocks in a page order to be printed, in order to generate reconstructed print data. The print image generation unit is configured to generate print image data on the basis of the reconstructed print data.

### SUMMARY OF THE INVENTION

The present invention is made in view of the circumstances, and objects of the present invention include providing an image forming apparatus, an image forming method, and a computer readable storage medium storing a program therein, each of which can more efficiently perform direct print with a smaller storage capacity.

According to the present invention the above object is a an image forming apparatus according to claim 1, an image forming method according to claim 7 and a computer readable storage medium according to claim 8. The dependent claims are directed to different advantageous aspects of the invention.

### BRIEF DESCRIPTION OF THE SEVERAL VIEWS OF THE DRAWING

The present invention is fully understood from the detailed description given hereinafter and the accompanying drawings, which are given by way of illustration only, and thus are not intended to limit the present invention, wherein:
FIG. 1 shows an image forming system including an image forming apparatus in accordance with an embodiment of the present invention;
FIG. 2 is a block diagram of the image forming apparatus;
FIG. 3 shows various types of image processing performed by an image processing unit of the image forming apparatus and data generated by the image processing;
FIG. 4 shows a data structure of an OOXML file;
FIG. 5 shows a setting related to image formation based on an OOXML file;
FIG. 6 is an illustration for explaining SpreadsheetML data;
FIG. 7 shows a comment attached to SpreadsheetML data;
FIG. 8A shows a print format for an OOXML file in a Presentation format, the print format in which only slides for a slide show are formed on a recording medium;
FIG. 8B shows a print format for an OOXML file in a Presentation format, the print format in which slides for a slide show and texts including explanation for contents of the slides are formed on a recording medium;
FIG. 9 shows a change history of an OOXML file in a WordProcessing format;
FIG. 10 is a schematic view of a data structure of the OOXML file shown in FIG. 4;
FIG. 11 is a flowchart showing image forming processing in accordance with the embodiment; and
FIG. 12 is a flowchart showing classification processing in the image forming processing.

### DETAILED DESCRIPTION OF THE INVENTION

In the following, an image forming apparatus 1 in accordance with an embodiment of the present invention is described referring to the drawings.

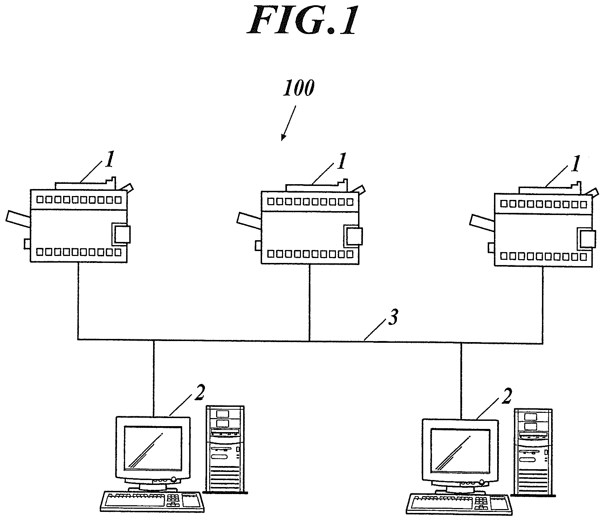

FIG. 1 shows an image forming system 100 including the image forming apparatus 1.

The image forming system 100 includes the image forming apparatus 1 and a terminal 2 which are connected with each other via a network 3 so as to be communicable with each other.

The image forming apparatus 1 forms images (image formation) in response to a print job sent from the terminal 2 via the network 3. The terminal 2 puts data such as application data as it is into the print job so as to send the print job including the data to the image forming apparatus 1. The application data is data used in application of a personal computer (PC) or the like, and not converted into a printer language by a printer driver or the like. Examples of the application include office suites such as Microsoft Word® and Microsoft Excel®. That is, the data sent from the terminal 2 to the image forming apparatus 1 is sent to the image forming apparatus 1 without being converted into a printer language. The image forming apparatus 1 analyzes (analyzing processing) and rasterizes (rasterizing processing) the data included in the print job so as to generate print data, and forms images on the basis of the generated print data. That is, the image forming apparatus 1 has a direct print function.

The terminal 2 is not limited to a desktop terminal such as a PC shown in FIG. 1, and hence may be a portable terminal, such as a mobile phone, a smartphone, or a tablet terminal.

The network 3 is a communication network constructed, for example, by utilizing an existing communication line, such as LAN (Local Area Network), WAN (Wide Area Network), WiFi (Wireless Fidelity), Bluetooth®, or NFC (Near Field Communication) . The network 3 may be a cable communication line, a wireless communication line, or a mixture of a cable communication line and a wireless communication line. The network 3 may include: various communication networks, such as a phone network, an ISDN network, a fiber-optic network, a mobile communication network, a communication satellite network, a cable television (CATV) network, and/or another dedicated line network; and an Internet service provider which connects the networks with each other.

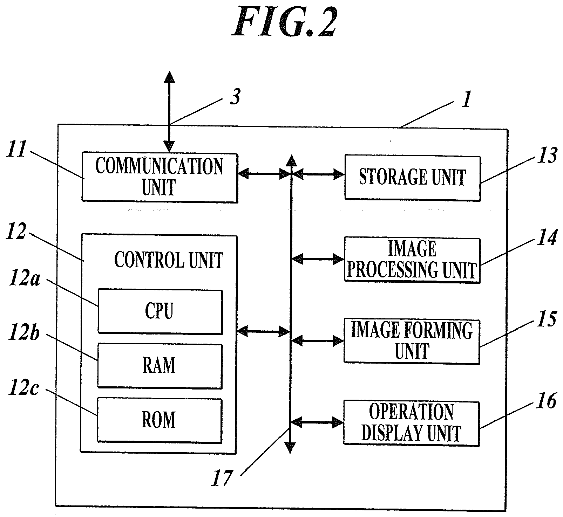

FIG. 2 is a block diagram of the image forming apparatus 1.

The image forming apparatus 1 includes a communication unit 11, a control unit 12, a storage unit 13, an image processing unit 14, an image forming unit 15, and an operation display unit 16. These units are connected with each other via a bus 17.

The communication unit 11 makes communications via the network 3. More specifically, the communication unit 11 includes a network interface card (NIC) or the like.

The communication unit 11 receives a print job (print jobs) including data, such as application data, sent from the terminal 2 via the network 3. Thus, the communication unit 11 functions as an obtaining unit which obtains data before being analyzed.

The control unit 12 performs various types of processing related to action of the image forming apparatus 1.

More specifically, the control unit 12 includes a CPU 12a, a RAM 12b, and a ROM 12c. The CPU 12a reads various programs, data, and the like, which are stored in the ROM 12c, the storage unit 13, and the like, so as to perform various types of processing, and controls action of the components (units and the like) of the image forming apparatus 1 in accordance with contents of the processing.

The storage unit 13 stores various data used by the image forming apparatus 1 therein.

The storage unit 13 includes at least one of a hard disk drive, a flash memory, and another type of storage device, and stores the data used by the image forming apparatus 1. The storage unit 13 stores the programs and the data read by the CPU 12a of the control unit 12. The storage unit 13 also stores use data. The use data is data used for image formation, of the data included in the print job received by the communication unit 11. The use data is described in detail below.

The image processing unit 14 performs various types of image processing to generate print data, such as bitmap data, from the use data.

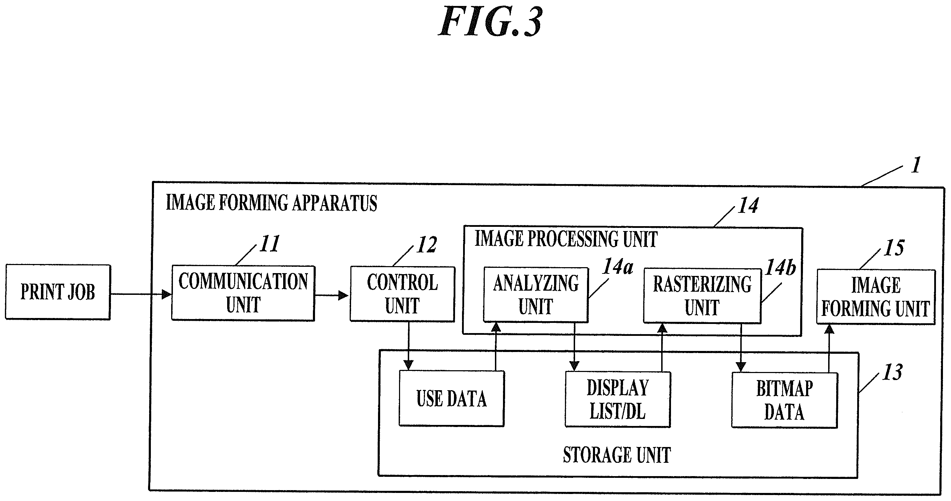

FIG. 3 shows the types of image processing performed by the image processing unit 14 and data generated by the image processing.

More specifically, the image processing unit 14 includes an analyzing unit 14a and a rasterizing unit 14b. The analyzing unit 14a analyzes use data so as to create a display list (DL) . The rasterizing unit 14b rasterizes the DL created by the analyzing unit 14a so as to generate bitmap data.

The image forming unit 14 forms images on the basis of the bitmap data generated by the image processing unit 14.

More specifically, the image forming unit 15 includes a carrying unit, a developing unit, a primary transfer unit, a secondary transfer unit, a fixation unit, and a paper ejection unit, and forms images on paper. The carrying unit takes paper out of a paper tray where paper is stored as a recording medium, and carries the paper. The developing unit develops toner images based on the bitmap data on a primary transfer member such as a transfer roller. The primary transfer unit transfers the toner images developed on the primary transfer member to a secondary transfer member such as a transfer belt. The secondary transfer unit transfers the toner images transferred to the secondary transfer member to the paper carried by the carrying unit. The fixation unit fixes the toner images transferred to the paper thereon. The paper ejection unit ejects the paper on which the toner images are fixed by the fixation unit.

The operation display unit 16 performs various types of display and output related to action of the image forming apparatus 1, and receives various input operations related to action of the image forming apparatus 1.

More specifically, the operation display unit 16 includes a liquid crystal display in a touch panel system and switches, which respectively correspond to contents of the input operations. The operation display unit 16 performs preview display to display images formed on paper with the liquid crystal display in response to processing performed by the control unit 12.

In addition, the operation display unit 16 displays a screen on which various setting items related to image formation and current setting contents of the setting items are displayed with the liquid crystal display, and also receives various input operations related to decision on or change in the setting contents made by a user with the touch panel or the switches. The control unit 12 decides or changes the setting contents related to image formation performed by the image forming apparatus 1 in response to the decision on or change in the setting contents made by the user via the operation display unit 16.

Next, a print job received by the communication unit 11 and processing performed on the print job by the image forming apparatus 1 are described. In the following, as an example of data included in the print job, an OOXML file is used.

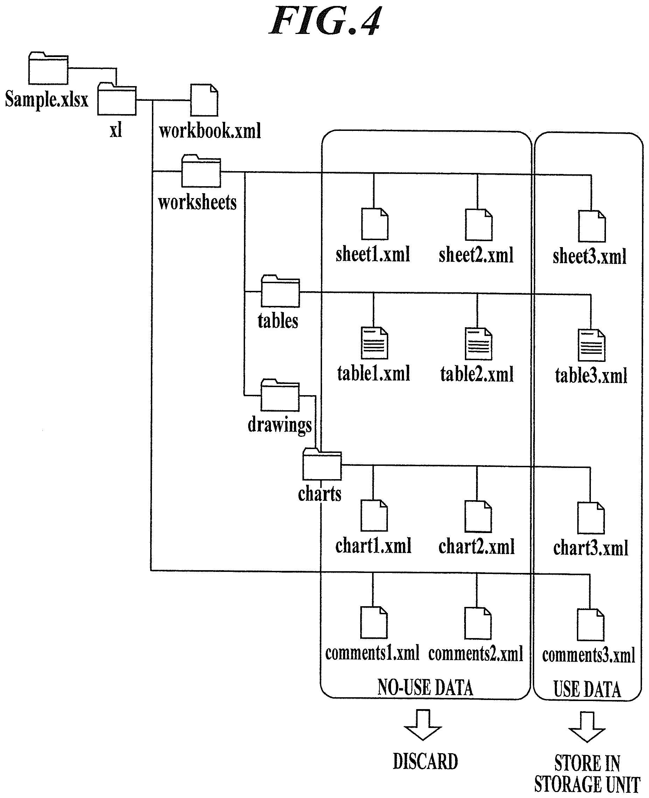

FIG. 4 shows a data structure of an OOXML file. The OOXML file shown in FIG. 4 is SpreadsheetML data. However, this is not a limit but an example. The SpreadsheetML data is an OOXML file expected to be used in spreadsheet software.

As shown in FIG. 4, the SpreadsheetML data includes a plurality of partial data. Examples of the partial data include partial data having file names "workbook.xml", "sheet (n) .xml", "table(n) .xml", "chart(n) .xml", and "comments(n) .xml". These partial data are compressed in ZIP format, -and included in the SpreadsheetML data.

The SpreadsheetML data shown in FIG. 4 includes a plurality of sheets. The " (n) " in each of the file names of the partial data indicates a number (sheet number) given to each sheet.

The "sheet (n) .xml" is partial data corresponding to one of the sheets included in the SpreadsheetML data. In the example shown in FIG. 4, "sheetl.xml", "sheet2.xml", and "sheet3.xml", which respectively correspond to three sheets, are included in the SpreadsheetML data having a file name "Sample.xlsx". The "table (n) .xlm" is table data included in each sheet. The "chart (n) .xml" is graph data included in each sheet.

The "comments(n).xml" is comment data included in each sheet.

The "workbook. xml" is common data used for all the sheets .

The SpreadsheetML data has a hierarchical structure having a plurality of levels.

For example, in the SpreadsheetML data having the file name "Sample.xlsx" shown in FIG. 4, the level "worksheets" is provided under the level "xl", the level "tables" and the level "drawings" are provided under the level "worksheets", and the level "charts" is provided under the level "drawings". Then, the "workbook.xml" and the "comment (n) .xml" are stored in the level "xl", the "sheet(n).xml" is stored in the level "worksheets", the "table(n).xml" is stored in the level "tables", and the "chart(n).xml" is stored in the level "charts".

Next, a setting related to image formation is described.

The image forming apparatus 1 stores the setting related to image formation in a storage device, such as the storage unit 13, in advance. The setting related to image formation is decided, for example, in accordance with the contents of the input operations made by a user via the operation display unit 16.

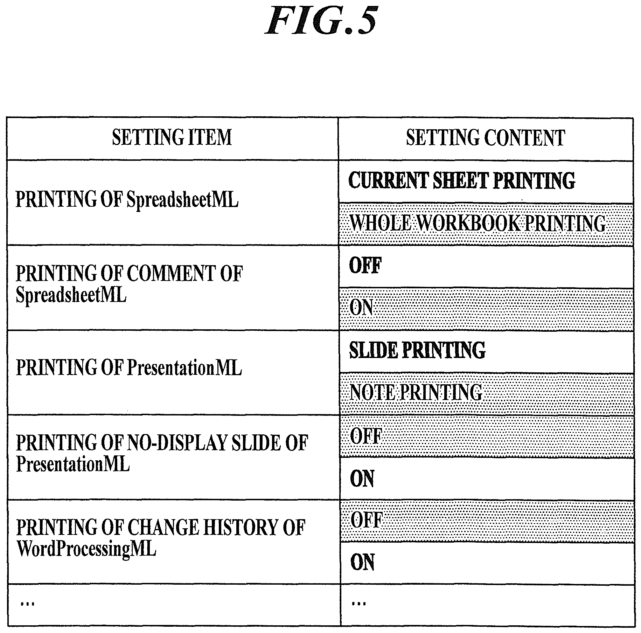

FIG. 5 shows the setting related to image formation based on the SpreadsheetML data.

The image forming apparatus 1 holds, as shown in FIG. 5 as an example, setting items and setting contents of the setting items as the setting related to image formation by storing the setting items and the setting contents in the storage unit 13.

In the example shown in FIG. 5, as the setting items, "Printing of SpreadsheetML", "Printing of Comment of SpreadsheetML", "Printing of PresentationML", "Printing of No-Display Slide of PresentationML", and "Printing of Change History of WordProcessingML" are shown. However, this is not a limit but an example . A user can appropriately decide or change the setting items related to image formation and the setting contents thereof depending on data used for image formation. In FIG. 5, the setting contents adopted are shown in boldface type, and the setting contents not adopted are masked (shaded) .

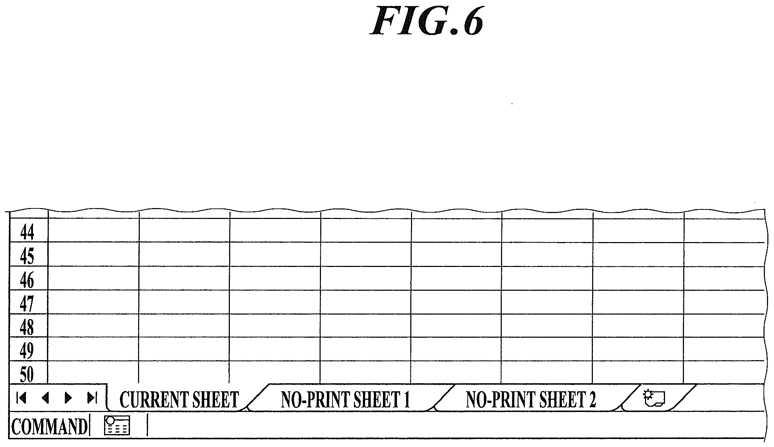

The "Printing of SpreadsheetML" is a setting item related to decision as to which sheet is a subject for image formation. The setting contents of the "Printing of SpreadsheetML" include "Current Sheet Printing" and "Whole Workbook Printing". In the case of the "Current Sheet Printing", as shown in FIG. 6, the control unit 12 processes only a current sheet as a subject for image formation, the current sheet being displayed at the most front when an information processing apparatus such as a PC opens the SpreadsheetML data, and does not process the other sheets as a subject for image formation. On the other hand, in the case of the "Whole Workbook Printing", the control unit 12 processes not only the current sheet but also the other sheets, namely, all the sheets included in the SpreadsheetML data, as a subject for image formation.

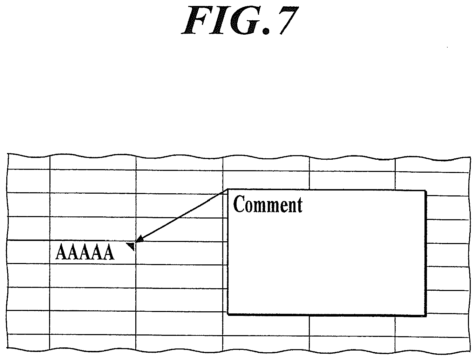

The "Printing of Comment of SpreadsheetML" is a setting item related to decision as to whether or not to process comments, as shown in FIG. 7, attached to the SpreadsheetML data as a subject for image formation. The setting item is represented by two values, such as "ON" and "OFF" (setting contents). In the case of the "ON", the control unit 12 processes the "comments (n) .xlm" as a subject for image formation. On the other hand, in the case of the "OFF", the control unit 12 dose not process the "comments (n) .xlm" as a subject for image formation.

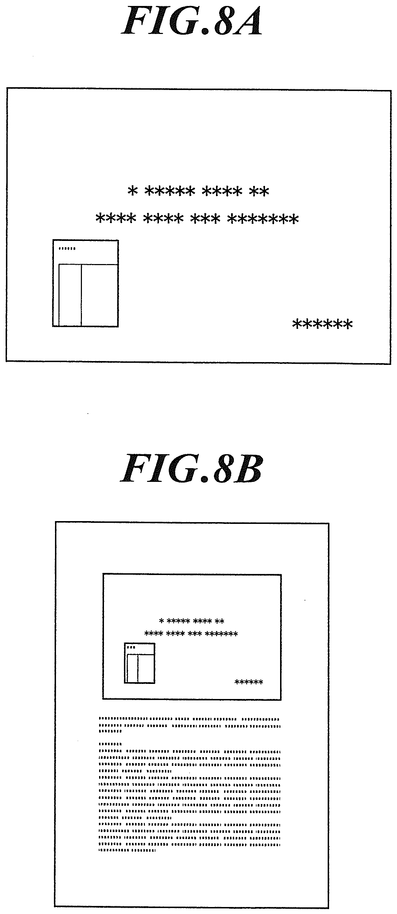

The "Printing of PresentationML" is a setting item related to a format for image formation based on PresentationML data. The PresentationML data is an OOXML file expected to be used for a slide show or the like at a presentation, namely, used in presentation software. Examples of the setting contents of the "Printing of PresentationML" include "Slide Printing" and "Note Printing". In the case of the "Slide Printing", as shown in FIG. 8A, the control unit 12 adopts a format in which only slides for a slide show are formed on a recording medium, and accordingly processes only data corresponding to the slides as a subject for image formation. On the other hand, in the case of the "Note Printing", as shown in FIG. 8B, the control unit 12 adopts a format in which slides for a slide show and texts including explanation for contents of the slides are formed on a recording medium, and accordingly processes data corresponding to both the slides and the texts as a subject for image formation.

The "Printing of No-Display Slide of PresentationML" is a setting item related to decision as to whether or not to process data corresponding to slides which are set not to be used for a slide show in the PresentationML data as a subject for image formation. The setting item is represented by two values, such as "ON" and "OFF" (setting contents) . In the case of the "ON", the control unit 12 processes the data corresponding to the slides which are set not to be used for a slide show as a subject for image formation. On the other hand, in the case of the "OFF", the control unit 12 does not process the data corresponding to the slides which are set not to be used for a slide show as a subject for image formation.

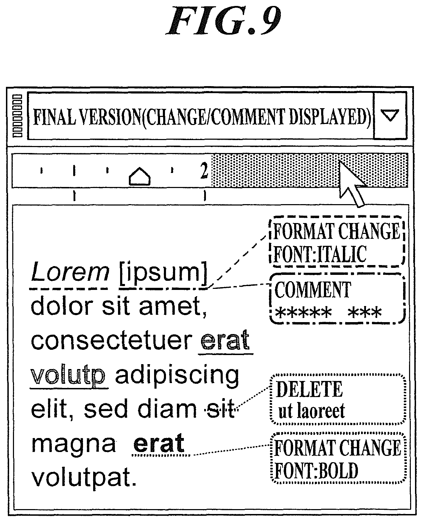

The "Printing of Change History of WordProcessingML" is a setting item related to decision as to whether or not to process a change history included in WordProcessingML data as a subject for image formation. The WordProcessingML data is an OOXML file expected to be used for document creation, namely, used in word processing software. The setting item is represented by two values, such as "ON" and "OFF" (setting contents) . In the case of the "ON", the control unit 12 processes the change history, as shown in FIG. 9, as a subject for image formation. On the other hand, in the case of the "OFF", the control unit 12 does not process the change history as a subject for image formation.

Next, classification and storage of data included in a print job are described.

The control unit 12 functions as a classification unit to classify contents of data included in a print job received by the communication unit 11 into use data and no-use data on the basis of a predetermined setting related to image formation. The control unit 12 also functions as a discarding unit to discard the no-use data. The storage unit 13 functions as a storage unit to store the use data. The no-use data is data not used for image formation, of the data included in the print job received by the communication unit 11.

For example, if the adopted setting content of the setting item "Printing of SpreadsheetML" is the "Current Sheet Printing" as shown in FIG. 5, and the current sheet of the SpreadsheetML data shown in FIG. 4 is the third sheet, the control unit 12 stores only data used for image formation of the third sheet as use data in the storage unit 13, and discards data used only for image formation of the other sheets as no-use data without storing the data in the storage unit 13. That is, the control unit 12 classifies the "sheet3.xml" corresponding to the third sheet and various data referred to in the third sheet, namely, the "sheet3.xml", the "table3.xml", and the "chart3.xml", as use data. The control unit 12 also classifies the "workbook.xml" used for all the sheets as use data. The control unit 12 stores various data classified as use data in the storage unit 13. On the other hand, the control unit 12 classifies the "sheet1.xml" corresponding to the first sheet and various data referred to in the first sheet, namely, the "sheet1.xml", the "table1.xml", the "chart1.xml", and the "comments1.xlm", as no-use data. The control unit 12 also classifies the "sheet2.xml" corresponding to the second sheet and various data referred to in the second sheet, namely, the "sheet2.xml", the "table2.xml", the "chart2.xml", and the "comments2.xlm", as no-use data. The control unit 12 discards various data classified as no-use data without storing the data in the storage unit 13.

If the adopted setting content of the setting item "Printing of Comment of SpreadsheetML" is the "OFF" as shown in FIG. 5, the control unit 12 classifies the "comments (n) .xlm" as no-use data, and discards the "comments(n).xlm" without storing the data in the storage unit 13. In this case, the control unit 12 classifies the "comments(n).xlm" as no-use data regardless of sheet numbers. For example, as described above, in the case where the third sheet is the current sheet, so that the third sheet is a subject for image formation, if the adopted setting content of the setting item "Printing of Comment of SpreadsheetML" is the "OFF", the control unit 12 classifies the "comments3.xlm" as no-use data, and discards the data without storing the data in the storage unit 13.

The control unit 12 successively classifies data (a plurality of partial data) included in a print job received by the communication unit 11 into use data and no-use data so as to classify each partial data of the data as the use data or the no-use data on the basis of a header for the partial data, and successively discards packets corresponding to the partial data classified as the no-use data.

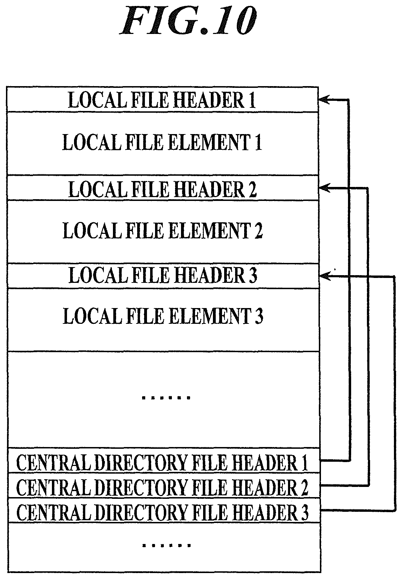

The control unit 12 functions as a generation unit to generate storing data indicating a data name (file name) and a data amount of each partial data discarded as the no-use data, which is described in the following referring to FIG. 10.

FIG. 10 is a schematic view of the SpreadsheetML data shown in FIG. 4.

As shown in FIG. 10, the SpreadsheetML data includes "Local File Header (n)", "Local File Element (n)", and "Central Directory File Header (n)".

The "Local File Header (n)" is a header (partial data) in which data for the "Local File Element (n)" is stored. The "Local File Element (n)" includes elements of each sheet in the SpreadsheetML data. The elements of each sheet include the "sheet(n).xlm", the "table(n).xlm", the "chart(n).xlm", and the "comments (n) .xlm". That is, the "Local File Header 1" shown in FIG. 10 is a local file header for the first sheet. The "Local File Element 1" immediately following the "Local File Header 1" includes the "sheet1.xlm", the "table1.xlm", the "chartl.xlm", and the "comments1.xlm". The same applies to the "Local File Header (n) " and the "Local File Element (n)" having other sheet numbers.

As described above, the control unit 12 discards partial data classified as no-use data. For example, if the adopted setting content of the setting item "Printing of SpreadsheetML" is the "Current Sheet Printing" as shown in FIG. 5, and the current sheet of the SpreadsheetML data shown in FIG. 4 is the third sheet, the control unit 12 discards the partial data of the "Local File Header (n)" and the partial data of the "Local File Element (n)" for the first sheet and the second sheet as no-use data.

The control unit 12 classifies each partial data of the "Local File Element (n) " as use data or no-use data on the basis of the setting contents related to image formation and the sheet number indicated by the "Local File Header (n)", and successively discards packets corresponding to the partial data classified as the no-use data. That is, in order to successively classify data included in a print job received by the communication unit 11, when packets corresponding to the "Local File Header (n)" are received, the control unit 12 classifies each partial data of the "Local File Element (n)", which is received following the "Local File Header (n)", as use data or no-use data on the basis of the setting contents related to image formation, such as the setting contents of "Printing of SpreadsheetML", and the sheet number indicated by the "Local File Header (n)". If the sheet number indicated by the "Local File Header (n)" is a sheet number for a sheet which is not a subject for image formation, the control unit 12 classifies the "Local File Header (n)" having the sheet number for the sheet which is not a subject for image formation as no-use data, and discards the data. The control unit 12 also successively discards the partial data of the "Local File Element (n) ", which has the same sheet number as that of the discarded "Local File Header (n)", and is received following the "Local File Header (n)", as no-use data.

The "Central Directory File Header (n) " stores relative addresses, each of which indicates a distance to an element, therein.

The "Central Directory File Header (n)" uses a relative address in the SpreadsheetML data to refer to data (partial data) . When partial data is discarded as no-use data, a relative address of partial data classified as use data (namely, a distance to the use data) is changed for the discarded partial data. Hence, the control unit 12 generates the storing data indicating a data name and a data amount of the partial data, which is discarded as no-use data. The control unit 12 corrects the relative address (or addresses) in the "Central Directory File Header (n) " in accordance with the data name and the data amount of the no-use data indicated by the storing data. Accordingly, even if no-use data is discarded, the "Central Directory File Header (n)" can properly refer to use data.

For example, the control unit 12 discards the partial data of the "Local File Header (n)" and the partial data of the "Local File Element (n)" for the first sheet and the second sheet as no-use data, and also generates the storing data in which file names and data amounts of the "sheet(n).xlm", the "table (n) .xlm", the "chart (n) .xlm", and the "comments (n) .xlm" included in the discarded data are stored, and correlates the storing data with the SpreadsheetML data so as to store the storing data correlated with the SpreadsheetML data in the storage unit 13.

Furthermore, although not shown, an OOXML file includes partial data unrelated to image formation performed by the image forming unit 15 (partial data unrelated to appearance of images formed by the image forming unit 15) regardless of the setting contents related to image formation, such as data related to editing of the OOXML file.

In the embodiment, partial data related to image formation performed by the image forming unit 15 (partial data related to appearance of images formed by the image forming unit 15) depending on the setting contents related to image formation is referred to as first partial data, and partial data unrelated to image formation performed by the image forming unit 15 (partial data unrelated to appearance of images formed by the image forming unit 15) regardless of the setting contents related to image formation is referred to as second partial data. The control unit 12 classifies the second partial data as no-use data. As described above referring to FIGS. 4 and 5, the control unit 12 classifies the first partial data as use data or no-use data on the basis of the setting contents related to image formation.

In the above, it is described that the control unit 12 classifies data into use data and no-use data, discards the no-use data, and stores the use data in the storage unit 13, on the basis of the SpreadsheetML data shown in FIG. 4 and the setting items shown in FIG. 5. However, this is not a limit but an example. The control unit 12 appropriately classifies data into use data and no-use data on the basis of data included in a print job and a setting related to image formation.

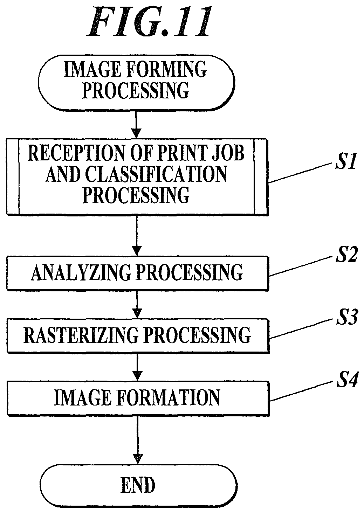

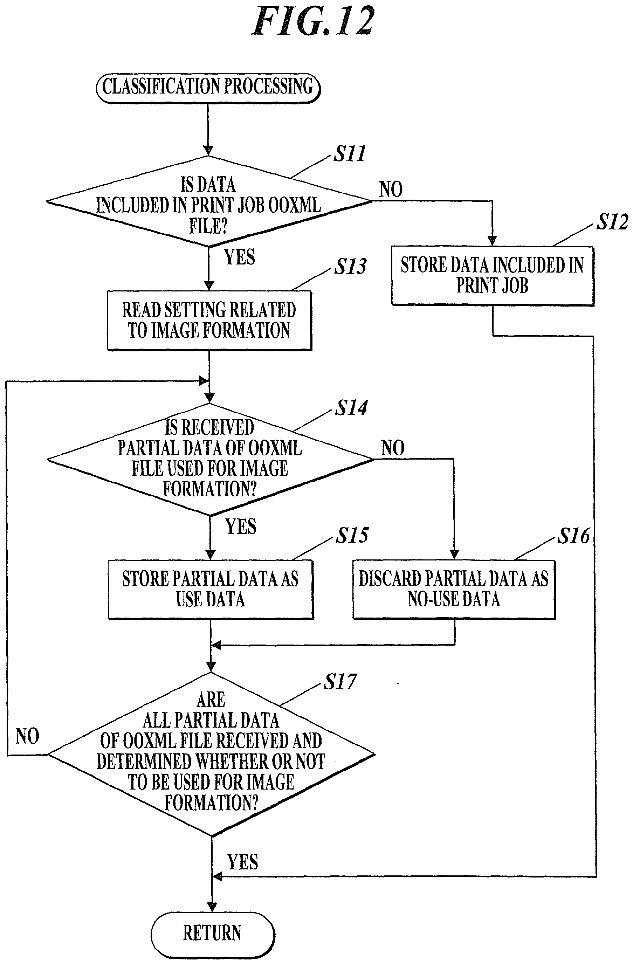

Next, image forming processing performed by the image forming apparatus 1 is described referring to flowcharts shown in FIGS. 11 and 12. The image forming processing is a series of steps from obtaining a print job to completing image formation.

FIG. 11 is a flowchart of the image forming processing in accordance with the embodiment.

When a print job is sent from the terminal 2 via the network 3, the communication unit 11 receives the print job (Step S1). At Step S1, the control unit 12 performs classification processing on data included in the print job, and stores only use data in the storage unit 13.

Here, the classification processing performed by the control unit 12 at Step S1 is described in detail referring to FIG. 12.

The control unit 12 reads a printer language included in the print job so as to determine whether or not data included in the print job, namely, data attached to the print job for image formation, is an OOXML file (Step 11) . When determining that the data included in the print job is not an OOXML file (Step S11; NO), the control unit 12 stores the data included in the print job received by the communication unit 11 in the storage unit 13 (Step S12), and ends the classification processing.

On the other hand, when determining that the data included in the print job is an OOXML file (Step S11; YES), the control unit 12 reads setting contents related to image formation from the storage unit 13 (Step S13). Next, the control unit 12 determines whether or not, of the OOXML file, received partial data is used for image formation on the basis of the setting contents related to image formation, which are read at Step S13, and a header for the received partial data of the OOXML data, such as the "Local File Header (n)" (Step S14) . When determining that the received partial data is used for image formation (Step S14; YES), the control unit 12 classifies the partial data as use data, and stores the partial data in the storage unit 13 (Step S15). On the other hand, when determining that the received partial data is not used for image formation (Step S14 ; NO), the control unit 12 classifies the partial data as no-use data, and discards packets corresponding to the partial data without storing the partial data in the storage unit 13 (Step S16) .

After Step S15 or S16, the control unit 12 determines whether or not all the elements of the OOXML file, namely, all the partial data constituting the OOXML file, are received, and determined whether or not to be used for image formation (Step S17). When determining that not all the partial data constituting the OOXML file are received, or determined whether or not to be used for image formation (Step S17; NO), the control unit 12 returns to Step S14, and successively receives elements (partial data), which are not yet determined whether or not to be used for image formation, determines whether or not the received elements are used for image formation, and discards or stores the elements . On the other hand, when determining that all the partial data constituting the OOXML file are received, and determined whether or not to be used for image formation (Step S17; YES), the control unit 12 ends the classification processing.

After Step S1, the image processing unit 14 reads the use data stored in the storage unit 13, and analyzes the read use data (analyzing processing) so as to create a DL (Step S2) . Then, the image processing unit 14 rasterizes the DL (rasterizing processing) created at Step S2 so as to generate bitmap data (Step S3) . Then, the image forming unit 15 forms images (image formation) on a recording medium on the basis of the bitmap data generated at Step S3 (Step S4).

As described above, according to the image forming apparatus 1 of the embodiment, when the communication unit 11 obtains a print job, the data of which includes partial data not used for image formation, such as OOXML data, the control unit 12 classifies the data of the print job into use data used for image formation and no-use data not used for image formation on the basis of the setting contents related to image formation, which are stored in the storage unit 13, and discards the no-use data. Accordingly, it is unnecessary to secure a storage region to store the no-use data in the storage unit 13, and hence the storage capacity of the storage unit 13 taken up with data used for image formation can be made smaller. Furthermore, because no-use data is discarded, the processing capacity of the control unit 12 spared for storing the no-use data can be assigned to other processing, and hence priority of processing related to image formation can be increased, and direct print can be more efficiently performed.

Furthermore, the control unit 12 classifies partial data unrelated to image formation, which is performed by the image forming unit 15, regardless of the setting contents related to image formation as no-use data. Accordingly, the partial data unrelated to image formation, which is performed by the image forming unit 15, regardless of the setting contents related to image formation, such as data related to editing of an OOXML file, can be discarded by simpler processing, which does not require referring to the setting contents related to image formation, and hence classification of data into use data and no-use data can be more efficiently performed.

Furthermore, the control unit 12 successively classifies a plurality of partial data of application data included in a print job into use data and no-use data so as to classify each partial data of the application data as the use data or the no-use data on the basis of a header for the partial data included in the application data, and successively discards packets corresponding to the partial data classified as the no-use data. Accordingly, the packets corresponding to the partial data classified as the no-use data on the basis of the header can be automatically discarded, and hence the no-use data can be more efficiently discarded.

Furthermore, the control unit 12 generates the storing data indicating a data name and a data amount of the discarded no-use data. Accordingly, processing to deal with change in data caused by discarding no-use data, such as change of a relative address, can be performed, and hence image formation intended by a user can be automatically performed.

The present invention is not limited to the above embodiment, and hence various modifications and design changes can be appropriately made without departing from the scope of the present invention.

For example, it is possible to identify a segment of use data, the segment being partly unrelated to image formation, on the basis of the setting related to image formation, so as to store the use data in which the segment is reduced in the storage unit 13.

More specifically, for example, a setting item related to reduction of colors used for image formation, such as "Monochrome Printing", is included in the setting related to image formation. In a case where the "Monochrome Printing" is "ON" (setting content), no matter what color is specified by data included in a print job, monochrome printing is performed. In this case, if the data included in the print job received by the communication unit 11 includes partial data using multiple colors for image formation, the control unit 12 makes the image processing unit 14 perform processing to reduce the number of colors of the partial data to the minimum number of colors necessary for monochrome printing so as to reduce the data amount of the partial data. That is, in this adopted setting content of the setting item related to image formation, namely, in the case where the "Monochrome Printing" is the "ON", "data on multiple colors" is a segment partly unrelated to image formation, and hence the control unit 12 makes the image processing unit 14 reduce the data amount as the "data on multiple colors" to the data amount as the "data on monochrome". Thus, the image processing unit 14 functions as a reducing unit to reduce a segment partly unrelated to image formation in use data.

Reducing the number of colors to reduce a data amount is not limited to reducing the number of colors from multiple colors to one color (monochrome), and hence may be reducing the number of colors from multiple colors to two colors, for example.

Furthermore, processing to reduce a segment partly unrelated to image formation on the basis of the setting contents related to image formation is not limited to reducing the number of colors. For example, if resolution of image data is more than resolution necessary for image formation, the control unit 12 or the image processing unit 14 may perform resolution conversion processing to reduce the resolution of the image data to the resolution necessary for image formation. Furthermore, if font data embedded in data included in a print job is the same as font data stored in advance in the storage unit 13, the ROM 12c, or the like of the image forming apparatus 1, the control unit 12 may classify the font data embedded in the data included in the print job as no-use data. In this case, the control unit 12 makes the image forming unit 15 perform image formation by using the font data stored in advance in the storage unit 13, the ROM 12c, or the like of the image forming apparatus 1.

Thus, by identifying, of use data, a segment partly unrelated to image formation on the basis of the setting contents related to image formation, and storing the use data in which the segment is reduced in the storage unit 13, the data amount of the use data can be reduced, and hence the storage capacity of the storage unit 13 taken up with data used for image formation can be made smaller.

Furthermore, in the embodiment, change of a relative address is managed on the basis of the storing data indicating a data name and a data amount of data discarded as no-use data. However, this is not a limit but an example, and hence another way to deal with change in data caused by discarding no-use data, such as change of a relative address, may be used. For example, the control unit 12 may calculate change of a relative address of use data of an OOXML file, the change being caused by discarding no-use data, overwrite the relative address included in the "Central Directory File Header (n)" with a relative address (changed relative address) to which the calculated change is applied, and store the use data with the changed relative address in the storage unit 13. In this case, the control unit 12 functions as a calculation unit and an overwriting unit.

Thus, by calculating change of a relative address of use data of application data, the change being caused by discarding no-use data, and applying the calculated change of the relative address to the use data, even if there is no storing data, the change of the relative address can be dealt with, and the storage capacity of the storage unit 13 taken up with data used for image formation can be made smaller.

Furthermore, in the embodiment, no-use data is discarded. However, a mode to discard no-use data and a mode to store no-use data may be switched.

For example, as a setting item of the setting related to image formation, there may be a setting item "Storage/Discarding of No-Use Data" so that setting contents (modes) "Storage" and "Discarding" thereof are switched. In this case, the operation display unit 16 functions as a switching unit.

Furthermore, in a case where the "Storage/Discarding of No-Use Data" is the "Storage", no-use data may be stored in the storage unit 13 or a storage device/region for no-use data. Thus, the storage unit 13 functions as a no-use data storage unit. It is preferable to store use data and no-use data in different storage regions.

Furthermore, of no-use data, only data classified as the no-use data on the basis of the setting related to image formation may be stored or discarded by switching the modes, and data classified as the no-use data regardless of the setting related to image formation may be automatically discarded no matter which mode is activated.

Thus, by providing the mode to store the no-use data, for example, even if change in the setting related to image formation is caused, and image formation is performed by using partial data which is classified as no-use data before the change in the setting related to image formation is caused, it is unnecessary for data included in a print job to be sent again. Accordingly, the change in the setting related to image formation can be more flexibly dealt with.

Furthermore, in the embodiment, the setting related to image formation is decided in accordance with the contents of the input operations made by a user via the operation display unit 16. However, this is not a limit but an example, and hence another way may be used to decide the setting related to image formation.

Furthermore, in the embodiment, an OOXML file is described as data including use data and no-use data. However, this is not a limit but an example. As long as it is data in a format including partial data unrelated to image formation, such as an ODF (Open Document Format) file, the data can be classified into use data and no-use data, and the use data and the no-use data can be processed differently, in the same manner as that described above with respect to an OOXML file.

Furthermore, in the embodiment, the image forming apparatus 1 receives a print job via the communication unit 11. However, this is not a limit but an example. As another example, the image forming apparatus 1 may include an interface with which the image forming apparatus 1 directly or indirectly connects with an external device such as the terminal 2. Furthermore, configurations of the components of the image forming apparatus 1 of the present invention are not limited to those described in the embodiment and/or shown in FIGS. 2 and 3, and hence the specific configurations of the components thereof can be appropriately changed without departing from the scope of the present invention. For example, dedicated components which respectively perform the functions of the control unit 12 may be provided. Furthermore, the image forming unit 15 is not limited to using electrophotography as described above, and hence may use another recording method, such as inkjet.

Furthermore, in the embodiment, the CPU 12a of the control unit 12 of the image forming apparatus 1 classifies data into use data and no-use data, and the image processing unit 14 generates print data. However, this is not a limit but an example. As another example, a CPU of a computer included in the image forming apparatus 1 or included in an external device connected with the image forming apparatus 1 may perform these functions of the control unit 12 and the image processing unit 14 by software processing which is performed by reading programs from an ROM or the like.

Furthermore, in the embodiment, a ROM is used as a computer readable storage medium to read the programs of the present invention. However, this is not a limit but an example. As another example, a nonvolatile memory such as a flash memory or a portable storage medium such as a CD-ROM can be used as the computer readable storage medium. Furthermore, a carrier wave can be used as a medium which provides data of the programs of the present invention via a communication line.

## Claims

1. An image forming apparatus (1) having a direct print function by which application data is obtained from an external device so that image formation is performed, the application data including SpreadsheetML data having a hierarchical structure having a plurality of levels, the image forming apparatus comprising:
an obtaining unit (11) configured to obtain the SpreadsheetML data;
a classification unit (12) configured to classify the SpreadsheetML data into use data used for the image formation and no-use data not used for the image formation on the basis of a predetermined setting related to the image formation, wherein the classification unit (12) classifies the SpreadsheetML data so as to classify each partial data of the SpreadsheetML data as the use data or the non-use data on the basis of a header for the partial data;
a discarding unit (12) configured to discard the no-use data, wherein the discarding unit (12) discards a packet corresponding to the partial data classified as the no-use data;
a storage unit (13) configured to store the predetermined setting related to the image formation in advance, the storage unit (13) being further configured to store the use data classified by the classification unit (12) ;
an image processing unit (14) configured to generate print data on the basis of the stored use data; and
an image forming unit (15) configured to perform the image formation on the basis of the print data;
wherein the predetermined setting related to the image formation includes a setting item related to a decision as to which sheet of the SpreadsheetML data is a subject for image formation, so as to set one of a current sheet printing mode for printing only a sheet being displayed at the most front when an information processing apparatus such as a PC opens the SpreadsheetML data and a whole workbook printing mode for printing a whole workbook of the SpreadsheetML data; wherein
when the current sheet printing mode is set as the predetermined setting related to the image formation for the SpreadsheetML data, a local file header having a number for a sheet other than the current sheet is discarded, and a local file element for the number is discarded.

2. The image forming apparatus (1) according to claim 1, further comprising an operation display unit (16), wherein:
the predetermined setting related to the image formation is decided in accordance with content input by a user via the operation display unit (16) and stored in the storage unit (13) in advance.

3. The image forming apparatus according to any of claims 1 or 2 further comprising:
a switching unit (16) configured to switch a first mode to discard the no-use data and a second mode not to discard the no-use data; and
a no-use data storage unit (13) configured to store the no-use data in response to the second mode.

4. The image forming apparatus according to any one of claims 1 to 3 further comprising a generation unit (12) configured to generate storing data indicating a data name and a data amount of the discarded no-use data.

5. The image forming apparatus according to any one of claims 1 to 4 further comprising:
a calculation unit (12) configured to calculate change of a relative address of the use data, the change being caused by discarding the no-use data; and
an overwriting unit (12) configured to overwrite the relative address with a relative address to which the calculated change is applied.

6. The image forming apparatus according to any one of claims 1 to 5, wherein
the classification unit (12) is configured to identify, of the use data, a segment partly unrelated to the image formation on the basis of the predetermined setting,
the classification unit (12) includes a reducing unit (12) which is configured to reduce the segment in the use data, and
the storage unit (13) is configured to store the use data in which the segment is reduced.

7. An image forming method for an image forming apparatus (1) according to claim 1, the image forming method comprises:
obtaining (S1) the application data, the application data including SpreadsheetML data having a hierarchical structure having a plurality of levels;
storing a predetermined setting related to image formation in advance;
classifying (S14) the SpreadsheetML data into use data used for the image formation and no-use data not used for the image formation on the basis of the predetermined setting related to the image formation, said classifying being performed so as to classify each partial data of the SpreadsheetML data as the use data or the non-use data on the basis of a header for the partial data;
discarding (S16) the no-use data by discarding a packet corresponding to the partial data classified as the no-use data;
storing (S15) the use data;
generating (S2, S3) print data on the basis of the stored use data; and
performing (S4) the image formation on the basis of the print data;
wherein the predetermined setting related to the image formation includes a setting item related to a decision as to which sheet of the SpreadsheetML data is a subject for image formation, so as to set one of a current sheet printing mode for printing only a sheet being displayed at the most front when an information processing apparatus such as a PC opens the SpreadsheetML data and a whole workbook printing mode for printing a whole workbook of the SpreadsheetML data; wherein
when the current sheet printing mode is set as the predetermined setting related to the image formation for the SpreadsheetML data, a local file header having a number for a sheet other than the current sheet is discarded, and a local file element for the number is discarded.

8. A computer readable storage medium storing a program which, when executed by a computer, causes the computer to perform the method of claim 7.

## Patentansprüche

1. Bilderzeugungsvorrichtung (1) mit einer direkten Druckfunktion, durch welche Anwendungsdaten von einer externen Vorrichtung erhalten werden, sodass eine Bilderzeugung durchgeführt wird, wobei die Anwendungsdaten SpreadsheetML-Daten umfassen, die eine hierarchische Struktur mit einer Vielzahl von Ebenen aufweisen, wobei die Bilderzeugungsvorrichtung aufweist:
eine Empfangseinheit (11), die konfiguriert ist, um die SpreadsheetML-Daten zu empfangen;
eine Klassifizierungseinheit (12), die konfiguriert ist, um die SpreadsheetML-Daten in Verwendungsdaten, die für die Bilderzeugung verwendet werden, und in Nicht-Verwendungsdaten, die nicht für die Bilderzeugung verwendet werden, auf Basis einer vorbestimmten Einstellung bezogen auf die Bilderzeugung zu klassifizieren, wobei die Klassifizierungseinheit (12) die SpreadsheetML-Daten so klassifiziert, dass alle partiellen Daten der SpreadsheetML-Daten als die Verwendungsdaten oder die Nicht-Verwendungsdaten auf Basis eines Kopfes für die partiellen Daten klassifiziert werden;
eine Verwerfungseinheit (12), die konfiguriert ist, um die Nicht-Verwendungsdaten zu verwerfen, wobei die Verwerfungseinheit (12) ein Paket korrespondierend zu den als die Nicht-Verwendungsdaten klassifizierten partiellen Daten verwirft;
eine Speichereinheit (13), die konfiguriert, um die vorbestimmte Einstellung bezogen auf die Bilderzeugung im Voraus zu speichern, wobei die Speichereinheit (13) ferner konfiguriert ist, um die durch die Klassifizierungseinheit (12) klassifizierten Verwendungsdaten zu speichern;
eine Bildverarbeitungseinheit (14), die konfiguriert ist, um Druckdaten auf Basis der gespeicherten Verwendungsdaten zu erzeugen; und
eine Bilderzeugungseinheit (15), die konfiguriert ist, um die Bilderzeugung auf Basis der Druckdaten durchzuführen;
wobei die vorbestimmte Einstellung bezogen auf die Bilderzeugung ein Einstellungselement bezogen auf eine Entscheidung umfasst, welches Blatt der SpreadsheetML-Daten als ein Subjekt für eine Bilderzeugung dienen, um eine von einer Aktuelles-Blatt-Druckbetriebsart zum Drucken lediglich eines Blattes, das zuvorderst angezeigt wird, wenn eine Informationsverarbeitungsvorrichtung, wie etwa ein PC, die SpreadsheetML-Daten öffnet, und einer Gesamte-Arbeitsmappe-Druckbetriebsart zum Drucken einer gesamten Arbeitsmappe der SpreadsheetML-Daten einzustellen; wobei
wenn die Aktuelles-Blatt-Druckbetriebsart als die vorbestimmte Einstellung bezogen auf die Bilderzeugung für die SpreadsheetML-Daten eingestellt ist, ein lokaler Dateikopf mit einer Anzahl für ein Blatt, das von dem aktuellen Blatt verschieden ist, verworfen wird, und ein lokales Dateielement für die Anzahl verworfen wird.

2. Bilderzeugungsvorrichtung (1) nach Anspruch 1, ferner mit einer Betriebsanzeigeeinheit (16), wobei:
die vorbestimmte Einstellung bezogen auf die Bilderzeugung gemäß einer Inhaltseingabe durch einen Nutzer über die Betriebsanzeigeeinheit (16) entschieden und in der Speichereinheit (13) im Voraus gespeichert wird.

3. Bilderzeugungsvorrichtung nach einem der Ansprüche 1 oder 2, ferner aufweisend:
eine Umschalteinheit (16), die konfiguriert ist, um eine erste Betriebsart zum Verwerfen der Nicht-Verwendungsdaten und eine zweite Betriebsart nicht zum Verwerfen der Nicht-Verwendungsdaten umzuschalten; und
eine Nicht-Verwendungsdatenspeichereinheit (13), die konfiguriert ist, um die Nicht-Verwendungsdaten im Ansprechen auf die zweite Betriebsart zu speichern.

4. Bilderzeugungsvorrichtung nach einem der Ansprüche 1 bis 3, ferner mit einer Erzeugungseinheit (12), die konfiguriert ist, um Speicherdaten zu erzeugen, die einen Datennamen und eine Datenmenge der verworfenen Nicht-Verwendungsdaten anzeigen.

5. Bilderzeugungsvorrichtung nach einem der Ansprüche 1 bis 4, ferner aufweisend:
eine Berechnungseinheit (12), die konfiguriert ist, um eine Änderung einer relativen Adresse der Verwendungsdaten zu berechnen, wobei die Änderung durch Verwerfen der Nicht-Verwendungsdaten bewirkt wird; und
eine Überschreibungseinheit (12), die konfiguriert ist, um die relative Adresse mit einer relativen Adresse zu überschreiben, bezüglich welcher die berechnete Änderung angewendet wird.

6. Bilderzeugungsvorrichtung nach einem der Ansprüche 1 bis 5, wobei
die Klassifizierungseinheit (12) konfiguriert ist, um von den Verwendungsdaten ein Segment, das sich teilweise nicht auf die Bilderzeugung bezieht, auf Basis der vorbestimmten Einstellung zu identifizieren,
die Klassifizierungseinheit (12) eine Verringerungseinheit (12) umfasst, welche konfiguriert ist, um das Segment in den Verwendungsdaten zu verringern, und
die Speichereinheit (13) konfiguriert ist, um die Verwendungsdaten, in welchen das Segment verringert ist, zu speichern.

7. Bilderzeugungsverfahren für eine Bilderzeugungsvorrichtung (1) nach Anspruch 1, wobei das Bilderzeugungsverfahren aufweist:
Erhalten (S1) der Anwendungsdaten, wobei die Anwendungsdaten SpreadsheetML-Daten mit einer hierarchischen Struktur, die eine Vielzahl von Ebenen aufweist, umfassen;
Speichern einer vorbestimmten Einstellung bezogen auf eine Bilderzeugung im Voraus;
Klassifizieren (S14) der SpreadsheetML-Daten in Verwendungsdaten, die für die Bilderzeugung verwendet werden, und Nicht-Verwendungsdaten, die nicht für die Bilderzeugung verwendet werden, auf Basis der vorbestimmten Einstellung bezogen auf die Bilderzeugung, wobei die Klassifizierung so durchgeführt wird, dass alle partiellen Daten der SpreadsheetML-Daten als die Verwendungsdaten oder die Nicht-Verwendungsdaten auf Basis eines Kopfes für die partiellen Daten klassifiziert werden;
Verwerfen (S16) der Nicht-Verwendungsdaten, indem ein Paket korrespondierend zu den als die Nicht-Verwendungsdaten klassifizierten partiellen Daten verworfen werden;
Speichern (S15) der Verwendungsdaten;
Erzeugen (S2, S3) von Druckdaten auf Basis der gespeicherten Verwendungsdaten; und
Durchführen (S4) der Bilderzeugung auf Basis der Druckdaten;
wobei die vorbestimmte Einstellung bezogen auf die Bilderzeugung ein Einstellungselement bezogen auf eine Entscheidung umfasst, welches Blatt der SpreadsheetML-Daten ein Subjekt für eine Bilderzeugung ist, um eine von einer Aktuelles-Blatt-Druckbetriebsart zum Drucken lediglich eines zuvorderst angezeigten Blatts, wenn eine Informationsverarbeitungsvorrichtung, wie etwa ein PC, die SpreadsheetML-Daten öffnet, und einer Gesamte-Arbeitsmappe-Druckbetriebsart zum Drucken einer gesamten Arbeitsmappe der SpreadsheetML-Daten einzustellen; wobei
wenn die Aktuelles-Blatt-Druckbetriebsart als die vorbestimmte Einstellung bezogen auf die Bilderzeugung für die SpreadsheetML-Daten eingestellt ist, ein lokaler Dateikopf mit einer Anzahl für ein Blatt, das sich von dem aktuellen Blatt unterscheidet, verworfen wird, und ein lokales Dateielement für die Anzahl verworfen wird.

8. Computerlesbares Speichermedium, das ein Programm speichert, welches, wenn es durch einen Computer ausgeführt wird, bewirkt, dass der Computer das Verfahren nach Anspruch 7 durchführt.

## Revendications

1. Appareil de formation d'image (1) ayant une fonction d'impression directe grâce à laquelle des données d'application sont obtenues depuis un dispositif externe de sorte qu'une formation d'image soit réalisée, les données d'application comportant des données SpreadsheetML ayant une structure hiérarchique ayant une pluralité de niveaux, l'appareil de formation d'image comprenant :
une unité d'obtention (11) configurée pour obtenir les données SpreadsheetML ;
une unité de classification (12) configurée pour classifier les données SpreadsheetML en données d'utilisation utilisées pour la formation d'image et en données de non-utilisation non utilisées pour la formation d'image sur la base d'un réglage prédéterminé lié à la formation d'image, dans lequel l'unité de classification (12) classifie les données SpreadsheetML de façon à classifier chaque donnée partielle des données SpreadsheetML en tant que données d'utilisation ou données de non-utilisation sur la base d'un en-tête pour les données partielles ;
une unité de mise au rebut (12) configurée pour mettre au rebut les données de non-utilisation, dans lequel l'unité de mise au rebut (12) met au rebut un paquet correspondant aux données partielles classifiées en tant que données de non-utilisation ;
une unité de stockage (13) configurée pour stocker à l'avance le réglage prédéterminé lié à la formation d'image, l'unité de stockage (13) étant en outre configurée pour stocker les données d'utilisation classifiées par l'unité de classification (12) ;
une unité de traitement d'image (14) configurée pour générer des données d'impression sur la base des données d'utilisation stockées ; et
une unité de formation d'image (15) configurée pour effectuer la formation d'image sur la base des données d'impression ;
dans lequel le réglage prédéterminé lié à la formation d'image comporte un élément de réglage lié à une décision quant à la feuille des données SpreadsheetML qui est un sujet de formation d'image, de façon à régler l'un d'un mode d'impression de feuille actuelle pour imprimer uniquement une feuille affichée le plus à l'avant lorsqu'un appareil de traitement d'informations tel qu'un ordinateur portable ouvre les données SpreadsheetML et d'un mode d'impression de classeur entier pour imprimer un classeur entier des données SpreadsheetML ; dans lequel
lorsque le mode d'impression de feuille actuelle est réglé en tant que réglage prédéterminé lié à la formation d'image pour les données SpreadsheetML, un en-tête de fichier local ayant un numéro pour une feuille autre que la feuille actuelle est mis au rebut, et un élément de fichier local pour le numéro est mis au rebut.

2. Appareil de formation d'image (1) selon la revendication 1, comprenant en outre une unité d'affichage d'opération (16), dans lequel :
le réglage prédéterminé lié à la formation d'image est décidé selon un contenu entré par un utilisateur via l'unité d'affichage d'opération (16) et stocké à l'avance dans l'unité de stockage (13).

3. Appareil de formation d'image selon l'une quelconque des revendications 1 ou 2, comprenant en outre :
une unité de permutation (16) configurée pour permuter un premier mode pour mettre au rebut les données de non-utilisation et un second mode pour ne pas mettre au rebut les données de non-utilisation ; et
une unité de stockage de données de non-utilisation (13) configurée pour stocker les données de non-utilisation en réponse au second mode.

4. Appareil de formation d'image selon l'une quelconque des revendications 1 à 3, comprenant en outre une unité de génération (12) configurée pour générer des données de stockage indiquant un nom de données et une quantité de données des données de non-utilisation mises au rebut.

5. Appareil de formation d'image selon l'une quelconque des revendications 1 à 4, comprenant en outre :
une unité de calcul (12) configurée pour calculer un changement d'une adresse relative des données d'utilisation, le changement étant provoqué par la mise au rebut des données de non-utilisation ; et
une unité d'écrasement (12) configurée pour écraser l'adresse relative par une adresse relative à laquelle est appliqué le changement calculé.

6. Appareil de formation d'image selon l'une quelconque des revendications 1 à 5, dans lequel
l'unité de classification (12) est configurée pour identifier, parmi les données d'utilisation, un segment en partie non lié à la formation d'image sur la base du réglage prédéterminé,
l'unité de classification (12) comporte une unité de réduction (12) qui est configurée pour réduire le segment dans les données d'utilisation, et
l'unité de stockage (13) est configurée pour stocker les données d'utilisation dans lesquelles le segment est réduit.

7. Procédé de formation d'image pour un appareil de formation d'image (1) selon la revendication 1, le procédé de formation d'image comprend :
l'obtention (S1) des données d'application, les données d'application comportant des données SpreadsheetML ayant une structure hiérarchique ayant une pluralité de niveaux ;
le stockage à l'avance d'un réglage prédéterminé lié à la formation d'image ;
la classification (S14) des données SpreadsheetML en données d'utilisation utilisées pour la formation d'image et en données de non-utilisation non utilisées pour la formation d'image sur la base du réglage prédéterminé lié à la formation d'image, ladite classification étant réalisée de façon à classifier chaque donnée partielle des données SpreadsheetML en tant que données d'utilisation ou données de non-utilisation sur la base d'un en-tête pour les données partielles ;
la mise au rebut (S16) des données de non-utilisation en mettant au rebut un paquet correspondant aux données partielles classifiées en tant que données de non-utilisation ;
le stockage (S15) des données d'utilisation ;
la génération (S2, S3) de données d'impression sur la base des données d'utilisation stockées ; et
la réalisation (S4) de la formation d'image sur la base des données d'impression ;
dans lequel le réglage prédéterminé lié à la formation d'image comporte un élément de réglage lié à une décision quant à la feuille des données SpreadsheetML qui est un sujet de formation d'image, de façon à régler l'un d'un mode d'impression de feuille actuelle pour imprimer uniquement une feuille affichée le plus à l'avant lorsqu'un appareil de traitement d'informations tel qu'un ordinateur portable ouvre les données SpreadsheetML et d'un mode d'impression de classeur entier pour imprimer un classeur entier des données SpreadsheetML ; dans lequel
lorsque le mode d'impression de feuille actuelle est réglé en tant que réglage prédéterminé lié à la formation d'image pour les données SpreadsheetML, un en-tête de fichier local ayant un numéro pour une feuille autre que la feuille actuelle est mis au rebut, et un élément de fichier local pour le numéro est mis au rebut.

8. Support de stockage lisible par ordinateur stockant un programme qui, lorsqu'il est exécuté par un ordinateur, amène l'ordinateur à réaliser le procédé selon la revendication 7.
